# EUROPÄISCHE PATENTSCHRIFT

(11) **EP 3 896 182 B1**
(45) Veröffentlichungstag und Bekanntmachung des Hinweises auf die Patenterteilung: **23.07.2025**
(21) Anmeldenummer: 20169834.7
(22) Anmeldetag: 16.04.2020
(51) Int. Cl.: C22C 23/02, B23K 35/02, B23K 35/28

(54) **MAGNESIUMLEGIERUNG FÜR LASERAUFTRAGSCHWEISSEN**
MAGNESIUM ALLOY FOR LASER BUILD-UP WELDING
ALLIAGE DE MAGNÉSIUM POUR LE SOUDAGE PAR DÉPÔT AU LASER

(43) Veröffentlichungstag der Anmeldung: 20.10.2021
(73) Patentinhaber: Helmholtz-Zentrum Geesthacht Zentrum für Material- und Küstenforschung GmbH, 21502 Geesthacht (DE)
(72) Erfinder: DIERINGA, Hajo, 21335 Lüneburg (DE); BOHLEN, Jan, 21339 Lüneburg (DE)
(74) Vertreter: Seemann & Partner Patentanwälte mbB

(56) Entgegenhaltungen:
- EP-A1- 1 418 248
- CN-A- 106 048 351
- US-A1- 2008 187 454
- FU H M ET AL: "Grain refinement by AlN particles in Mg-Al based alloys", JOURNAL OF ALLOYS AND COMPOUNDS, ELSEVIER SEQUOIA, LAUSANNE, CH, vol. 478, no. 1-2, 10 June 2009 (2009-06-10), pages 809 - 812, XP026095481, ISSN: 0925-8388, [retrieved on 20090506], DOI: 10.1016/J.JALLCOM.2008.12.029

## Beschreibung

Die Erfindung betrifft eine Verwendung einer Magnesiumlegierung. Außerdem betrifft die Erfindung einen Schweißzusatzstoff für, insbesondere drahtbasiertes, Laserauftragschweißen und ein Verfahren zum Herstellen eines, vorzugsweise metallischen, Bauteils.

Magnesiumlegierungen sind allgemein bekannt. Diese zeichnen sich durch ein gutes Verhältnis von Festigkeit zur Dichte aus. Außerdem lassen sich Magnesiumlegierungen leicht mechanisch bearbeiten.

DE 11 2007 002 016 T5 offenbart eine hochfeste, nicht-brennbare Magnesiumlegierung. Die Legierung ist hergestellt durch Zugeben zumindest eines zusätzlichen Additivs, ausgewählt aus Kohlenstoff (C), Molybdän (Mo), Niob (Nb), Silizium (Si), Wolfram (W), Aluminiumoxid (Al₂O₃), Magnesiumsilicid (Mg₂Si) und Siliziumkarbid (SiC) zu einer nicht brennbaren Magnesiumlegierung, und durch Zugabe von 0,5 bis 5,0 Massen-% von Calcium.

Ferner ist in EP 1 400 605 B1 ein Draht aus einer Magnesiumlegierung und ein Herstellungsverfahren hierfür beschrieben.

In EP 1 418 248 A1 ist außerdem eine hitzebeständige Magnesiumlegierung mit 1 bis 6 Gew. % Aluminium (AI), 05 bis 3 Gew. % Calzium (Ca) und mit 0,2 bis 1 Gew. % Mangan (Mn) offenbart.

Darüber ist im Artikel von H.M. Fu, et al., "Grain refinement by AIN Particles in Mg-Al based alloys", Journal of Alloys and Compounds 478 (2009), Seiten 809 bis 812, die Kornfeinung von Magnesium-Aluminium-Legierungen durch die Zugabe von Aluminiumnitrid (AIN) beschrieben.

Eine Aufgabe der Erfindung besteht darin, eine Magnesiumlegierung bereitzustellen, die nicht oder nur schwer entflammbar ist, wobei insbesondere die Magnesiumlegierung z.B. für den Einsatz beim Laserauftragschweißen geeignet sein soll sowie die Herstellung von Bauteilen beim Laserauftragschweißen verbessert werden soll.

Gelöst wird diese Aufgabe durch einen Schweißzusatzstoff für, insbesondere drahtbasiertes, Laserauftragschweißen, wobei der Schweißzusatzstoff aus einer Magnesiumlegierung hergestellt ist, wobei die Magnesiumlegierung bezogen auf das Gesamtgewicht der Legierung aus den folgenden Bestandteilen besteht:
3,0 Gew. % bis 9,0 Gew. % Aluminium (AI),
0,2 Gew. % bis 2,0 Gew. % Calcium (Ca),
0,1 Gew. % bis 0,8 Gew. % Mangan (Mn),
0,2 Gew. % bis 2,0 Gew. % Aluminiumnitrid (AIN),
und Magnesium und unvermeidbare, insbesondere herstellungsbedingte, Verunreinigungen als Rest.

Der Vorteil der erfindungsgemäßen Magnesiumlegierung besteht u.a. darin, dass durch eine Zugabe bzw. eine Zulegierung von Calcium (Ca) zur Rohmaterial-Magnesiumlegierung die Entflammbarkeit der Legierung stark reduziert wird oder verhindert wird. Außerdem wird durch die zusätzliche Zugabe von Aluminiumnitrid (AIN), das vorzugsweise in Form von Nanopartikeln zugegeben wird, eine signifikante Kornfeinung bei der hergestellten Legierung erzielt. Ein besonderer Vorteil durch Aluminiumnitrid bzw. die Aluminiumnitrid-Nanopartikel in der Magnesiumlegierung besteht darin, dass die Kornfeinung der Legierung auch nach Wiederaufschmelzen und erneutem Erstarren der Legierung bestehen bleibt bzw. vorhanden ist.

Die erfindungsgemäße Kombination der Bestandteile der Magnesiumlegierung bzw. das Zulegieren der Bestandteile bewirkt, dass bei der erfindungsgemäßen Magnesiumlegierung die Entflammbarkeit herabgesetzt wird und zudem Kornfeinung ausgebildet wird. Aufgrund dieser Eigenschaften der Magnesiumlegierung ist diese besonders geeignet, als Schweißwerkstoff oder als Laserschweißdraht für das Laserauftragschweißen eingesetzt oder verwendet zu werden, da beim Aufschmelzen der Magnesiumlegierung als Schweißzusatzwerkstoff durch einen energiereichen Laserstrahl einer Laserauftragschweißvorrichtung die Magnesiumlegierung nicht entflammt. Ferner werden beim bzw. nach Auftragen des Schweißwerkstoffs auf ein, insbesondere metallisches, Bauteil die mechanischen Eigenschaften eines mit einer auf einer Oberfläche mit der Magnesiumlegierung versehenen Bauteils verbessert.

Als Bauteile werden beispielsweise metallische Bauteile auf ihrer Oberfläche mit einer Struktur aus der Magnesiumlegierung mittels des Laserauftragschweißens versehen. Die Strukturen können in einer Ausgestaltung sowohl flächig als auch in einer dreidimensionalen Form auf die Oberfläche durch Aufschmelzen der Magnesiumlegierung ausgebildet sein. U.a. können die Bauteile in einer Weiterbildung, vorzugsweise metallische, Bauteile oder Halbzeuge aus den Bereichen von Maschinenbau, Automobilen, Motoren, Schiffen und/ oder Flugzeugen sein. Auch weitere mit der Magnesiumlegierung versehene, vorzugsweise metallische, Bauteile aus anderen Bereichen und Branchen sind im Rahmen der Erfindung möglich.

Gemäß dem Stand der Technik werden für die Laserauftragschweißverfahren Magnesiumlegierungen gar nicht oder kaum verwendet, weil bei ihnen in der Anwendung eine große Brandgefahr besteht. Diese Brandgefahr beim Laserauftragschweißen wird durch die erfindungsgemäße Legierung vermieden. Die mechanischen Eigenschaften des Bauteils sind durch das feine Korn des aus der Magnesiumlegierung bestehenden oder hergestellten Schweißwerkstoffs deutlich erhöht, wodurch sich die Anwendungsmöglichkeiten für Magnesiumwerkstoffe für das Laserauftragschweißen erhöhen.

Vorzugsweise ist bei der Magnesiumlegierung vorgesehen, dass der untere Grenzwert des Anteils an Aluminium (AI) in Gew. % ausgewählt ist aus der Gruppe der folgenden Werte {3,0; 3,1; 3,2; 3,3; 3,4; 3,5; 3,6; 3,7; 3,8; 3,9; 4,0; 4,1; 4,2; 4,3; 4,4; 4,5; 4,6; 4,7; 4,8; 4,9; 5,0; 5,1; 5,2; 5,3; 5,4; 5,5; 5,6; 5,7; 5,8; 5,9; 6,0; 6,1; 6,2; 6,3; 6,4; 6,5; 6,6; 6,7; 6,8; 6,9; 7,0; 7,1; 7,2; 7,3; 7,4; 7,5; 7,6; 7,7; 7,8; 7,9; 8,0; 8,1; 8,2; 8,3; 8,4; 8,5; 8,6; 8,7; 8,8; 8,9; 9,0} und der obere Grenzwert an Aluminium (AI) des Anteils in Gew. % ausgewählt ist aus der Gruppe der folgenden Werte {3,0; 3,1; 3,2; 3,3; 3,4; 3,5; 3,6; 3,7; 3,8; 3,9; 4,0; 4,1; 4,2; 4,3; 4,4; 4,5; 4,6; 4,7; 4,8; 4,9; 5,0; 5,1; 5,2; 5,3; 5,4; 5,5; 5,6; 5,7; 5,8; 5,9; 6,0; 6,1; 6,2; 6,3; 6,4; 6,5; 6,6; 6,7; 6,8; 6,9; 7,0; 7,1; 7,2; 7,3; 7,4; 7,5; 7,6; 7,7; 7,8; 7,9; 8,0; 8,1; 8,2; 8,3; 8,4; 8,5; 8,6; 8,7; 8,8; 8,9; 9,0}, wobei der untere Grenzwert des Anteils an Aluminium (AI) kleiner als der obere Grenzwert des Anteils oder der untere Grenzwert des Anteils gleich dem oberen Grenzwert des Anteils ist.

Vorzugsweise ist bei der Magnesiumlegierung vorgesehen, dass der untere Grenzwert des Anteils an Calcium (Ca) in Gew. % ausgewählt ist aus der Gruppe der folgenden Werte {0,2; 0,3; 0,4; 0,5; 0,6; 0,7; 0,8; 0,9; 1,0; 1,1; 1,2; 1,3; 1,4; 1,5; 1,6; 1,7; 1,8; 1,9; 2,0} und der obere Grenzwert an Calcium (Ca) des Anteils in Gew. % ausgewählt ist aus der Gruppe der folgenden Werte {0,2; 0,3; 0,4; 0,5; 0,6; 0,7; 0,8; 0,9; 1,0; 1,1; 1,2; 1,3; 1,4; 1,5; 1,6; 1,7; 1,8; 1,9; 2,0}, wobei der untere Grenzwert des Anteils an Calcium (Ca) den oberen Grenzwert des Anteils nicht übersteigt oder der untere Grenzwert des Anteils gleich dem oberen Grenzwert des Anteils ist.

Vorzugsweise ist bei der Magnesiumlegierung vorgesehen, dass der untere Grenzwert des Anteils an Mangan (Mn) in Gew. % ausgewählt ist aus der Gruppe der folgenden Werte {0,1; 0,2; 0,3; 0,4; 0,5; 0,6; 0,7; 0,8} und der obere Grenzwert an Mangan (Mn) des Anteils in Gew. % ausgewählt ist aus der Gruppe der folgenden Werte {0,1; 0,2; 0,3; 0,4; 0,5; 0,6; 0,7; 0,8}, wobei der untere Grenzwert des Anteils an Mangan (Mn) kleiner als der obere Grenzwert des Anteils ist oder der untere Grenzwert des Anteils gleich dem oberen Grenzwert des Anteils ist.

Vorzugsweise ist bei der Magnesiumlegierung vorgesehen, dass der untere Grenzwert des Anteils an Aluminiumnitrid (AIN) in Gew. % ausgewählt ist aus der Gruppe der folgenden Werte {0,2; 0,3; 0,4; 0,5; 0,6; 0,7; 0,8; 0,9; 1,0; 1,1; 1,2; 1,3; 1,4; 1,5; 1,6; 1,7; 1,8; 1,9; 2,0} und der obere Grenzwert an Aluminiumnitrid (AIN) des Anteils in Gew. % ausgewählt ist aus der Gruppe der folgenden Werte {0,2; 0,3; 0,4; 0,5; 0,6; 0,7; 0,8; 0,9; 1,0; 1,1; 1,2; 1,3; 1,4; 1,5; 1,6; 1,7; 1,8; 1,9; 2,0}, wobei der untere Grenzwert des Anteils an Aluminiumnitrid (AI) kleiner als der obere Grenzwert des Anteils ist oder der untere Grenzwert des Anteils gleich dem oberen Grenzwert des Anteils ist.

Gemäß einer Weiterbildung des Schweißzusatzstoffs ist vorgesehen, dass Aluminiumnitrid als Nanopartikel mit einer Partikelgröße von 80 nm (Nanometer) bis 400 nm (Nanometer), vorzugsweise von 80 nm bis 250 nm, im, vorzugsweise maximalen, Durchmesser, vorliegen.

Beim Laserauftragschweißen wird der Schweißzusatzstoff, der z.B. als Laserschweißdraht ausgebildet ist, mittels der energiereichen Strahlung eines Lasers im Bereich einer, insbesondere metallischen, Oberfläche eines Bauteils aufgeschmolzen, wobei gleichzeitig die Oberfläche des Bauteils lokal ebenfalls aufgeschmolzen wird, wodurch an der aufgeschmolzenen Stelle der aus der Magnesiumlegierung bestehende und aufgeschmolzene Schweißwerkstoff sich mit der metallischen Oberfläche des Bauteils verbindet, wodurch die Magnesiumlegierung auf die Oberfläche des Bauteils aufgebracht ist.

Dazu ist in einer Ausgestaltung beim Schweißzusatzstoff vorgesehen, dass der Schweißzusatzstoff als ein Draht mit einem Durchmesser von 0,5 mm (Millimeter) bis 2,0 mm (Millimeter) oder als Band mit einem Durchmesser von 0,5 mm bis 2,0 mm ausgebildet ist oder wird.

Der Schweißzusatzstoff zeichnet sich ferner gemäß einem Aspekt dadurch aus, dass der Schweißzusatzstoff gemäß einem Strangpressverfahren hergestellt ist. Im Rahmen der Erfindung ist es möglich, dass der Schweißzusatzwerkstoff unter Verwendung einer Strangpressvorrichtung stranggepresst wird, wobei die Strangpressvorrichtung gemäß eines direkten oder indirekten oder hydrostatischen Strangpressverfahrens betrieben wird oder ist.

Beim direkten Strangpressen ist beispielsweise vorgesehen, dass ein Stempel einen aus der Magnesiumlegierung bestehenden Block entlang einer Innenoberfläche eines Rezipienten in Richtung einer Matrize drückt. Das indirekte Strangpressverfahren zeichnet sich dadurch aus, dass der Rezipient an einer Seite geschlossen ist, wobei von der anderen Seite des Rezipienten die Matrize auf den aus der Magnesiumlegierung bestehenden Block gepresst wird, die sich am Kopf eines Hohlstempels befindet. Beim Pressen wird der Strang durch eine Stempelbohrung hindurchgepresst. Das hydrostatische Strangpressverfahren wird dadurch realisiert, dass die Presskraft vom Stempel nicht unmittelbar, sondern über ein Wirkmedium (Öl) auf den Block aufgebracht wird.

Eine weitere Lösung der Aufgabe erfolgt durch eine Verwendung einer zur Herstellung eines, insbesondere drahtförmigen oder bandförmigen, Schweißzusatzstoffs für, insbesondere drahtbasiertes, Laserauftragschweißen, wobei die Magnesiumlegierung bezogen auf das Gesamt-gewicht der Legierung aus den folgenden Bestandteilen besteht:
3,0 Gew. % bis 9,0 Gew. % Aluminium (AI),
0,2 Gew. % bis 2,0 Gew. % Calcium (Ca),
0,1 Gew. % bis 0,8 Gew. % Mangan (Mn),
0,2 Gew. % bis 2,0 Gew. % Aluminiumnitrid (AIN),
und Magnesium und unvermeidbare, insbesondere her-stellungsbedingte, Verunreinigungen als Rest.

Vorzugsweise liegen Aluminiumnitrid als Nanopartikel mit einer Partikelgröße von 80 nm bis 400 nm, vorzugsweise von 80 nm bis 250 nm, im, vorzugsweise maximalen, Durchmesser, vor.

Dabei ist in einer Weiterbildung vorgesehen, dass der Schweißzusatzstoff als ein Draht, insbesondere mit einem Durchmesser von 0,5 mm bis 2,0 mm, oder als Band, insbesondere mit einem Durchmesser von 0,5 mm bis 2,0 mm, ausgebildet ist oder wird.

Insbesondere ist oder wird der Schweißzusatzstoff gemäß einem Strangpressverfahren herstellbar oder hergestellt.

Eine Ausgestaltung der Verwendung der Magnesiumlegierung zeichnet sich dadurch aus, dass die Magnesiumlegierung als eine Struktur auf eine, vorzugsweise metallische, Oberfläche eines, vorzugsweise metallischen Bauteils, insbesondere durch Aufschmelzen, aufgebracht wird oder ist.

Außerdem wird die Aufgabe gelöst durch ein Verfahren zum Herstellen eines, vorzugsweise metallischen, Bauteils, wobei auf eine, vorzugsweise metallische, Oberfläche des Bauteils eine Struktur aus einer Magnesiumlegierung, wie voranstehend beschrieben, mittels, vorzugsweise drahtbasierten, Laserauftragschweißens unter Verwendung einer Laserauftragschweißvorrichtung, insbesondere durch Aufschmelzen, aufgebracht wird, wobei die Magnesiumlegierung bezogen auf das Gesamtgewicht der Legierung aus den folgenden Bestandteilen besteht:
3,0 Gew. % bis 9,0 Gew. % Aluminium (AI),
0,2 Gew. % bis 2,0 Gew. % Calcium (Ca),
0,1 Gew. % bis 0,8 Gew. % Mangan (Mn),
0,2 Gew. % bis 2,0 Gew. % Aluminiumnitrid (AIN),
und Magnesium und unvermeidbare, insbesondere herstellungsbedingte, Verunreinigungen als Rest.

Dazu ist insbesondere vorgesehen, dass ein aus der Magnesiumlegierung hergestellter Schweißzusatzwerkstoff mittels der Laserauftragschweißvorrichtung auf die Oberfläche des Bauteils aufgebracht wird. Hierbei wird der Schweißzusatzstoff mittels eines Lasers der Laserauftragschweißvorrichtung aufgeschmolzen und auf das Bauteil aufgebracht.

Vorzugsweise ist der Schweißzusatzwerkstoff als Draht oder Band ausgebildet.

## Patentansprüche

1. Schweißzusatzstoff für, insbesondere drahtbasiertes, Laserauftragschweißen, wobei der Schweißzusatzstoff aus einer Magnesiumlegierung hergestellt ist, wobei die Magnesiumlegierung bezogen auf das Gesamtgewicht der Legierung aus den folgenden Bestandteilen besteht:
3,0 Gew. % bis 9,0 Gew. % Aluminium (AI),
0,2 Gew. % bis 2,0 Gew. % Calcium (Ca),
0,1 Gew. % bis 0,8 Gew. % Mangan (Mn),
0,2 Gew. % bis 2,0 Gew. % Aluminiumnitrid (AIN),
und Magnesium und unvermeidbare, insbesondere herstellungsbedingte, Verunreinigungen als Rest.

2. Schweißzusatzstoff nach Anspruch 1, **dadurch gekennzeichnet, dass** Aluminiumnitrid als Nanopartikel mit einer Partikelgröße von 80 nm bis 400 nm, vorzugsweise von 80 nm bis 250 nm, im, vorzugsweise maximalen, Durchmesser, vorliegen.

3. Schweißzusatzstoff nach Anspruch 1 oder 2, **dadurch gekennzeichnet, dass** der Schweißzusatzstoff als ein Draht mit einem Durchmesser von 0,5 mm bis 2,0 mm oder als Band mit einem Durchmesser von 0,5 mm bis 2,0 mm ausgebildet ist oder wird.

4. Schweißzusatzstoff nach einem der Ansprüche 1 bis 3, **dadurch gekennzeichnet, dass** der Schweißzusatzstoff gemäß einem Strangpressverfahren hergestellt ist.

5. Verwendung einer Magnesiumlegierung zur Herstellung eines, insbesondere drahtförmigen oder bandförmigen, Schweißzusatzstoffs für, insbesondere drahtbasiertes, Laserauftragschweißen, wobei die Magnesiumlegierung bezogen auf das Gesamtgewicht der Legierung aus den folgenden Bestandteilen besteht:
3,0 Gew. % bis 9,0 Gew. % Aluminium (AI),
0,2 Gew. % bis 2,0 Gew. % Calcium (Ca),
0,1 Gew. % bis 0,8 Gew. % Mangan (Mn),
0,2 Gew. % bis 2,0 Gew. % Aluminiumnitrid (AIN),
und Magnesium und unvermeidbare, insbesondere herstellungsbedingte, Verunreinigungen als Rest.

6. Verwendung nach Anspruch 5, **dadurch gekennzeichnet, dass** Aluminiumnitrid als Nanopartikel mit einer Partikelgröße von 80 nm bis 400 nm, vorzugsweise von 80 nm bis 250 nm, im, vorzugsweise maximalen, Durchmesser, vorliegen.

7. Verwendung nach Anspruch 5 oder 6, **dadurch gekennzeichnet, dass** der Schweißzusatzstoff als ein Draht, insbesondere mit einem Durchmesser von 0,5 mm bis 2,0 mm, oder als Band, insbesondere mit einem Durchmesser von 0,5 mm bis 2,0 mm, ausgebildet ist oder wird.

8. Verwendung nach einem der Ansprüche 5 bis 7, **dadurch gekennzeichnet, dass** der Schweißzusatzstoff gemäß einem Strangpressverfahren hergestellt ist oder wird.

9. Verwendung nach einem der Ansprüche 5 bis 8, **dadurch gekennzeichnet, dass** die Magnesiumlegierung als eine Struktur auf eine, vorzugsweise metallische, Oberfläche eines, vorzugsweise metallischen Bauteils, insbesondere durch Aufschmelzen, aufgebracht wird oder ist.

10. Verfahren zum Herstellen eines, vorzugsweise metallischen, Bauteils, wobei auf eine, vorzugsweise metallische, Oberfläche des Bauteils eine Struktur aus einer Magnesiumlegierung mittels, vorzugsweise drahtbasierten, Laserauftragschweißens unter Verwendung einer Laserauftragschweißvorrichtung, insbesondere durch Aufschmelzen, aufgebracht wird, wobei die Magnesiumlegierung bezogen auf das Gesamtgewicht der Legierung aus den folgenden Bestandteilen besteht:
3,0 Gew. % bis 9,0 Gew. % Aluminium (AI),
0,2 Gew. % bis 2,0 Gew. % Calcium (Ca),
0,1 Gew. % bis 0,8 Gew. % Mangan (Mn),
0,2 Gew. % bis 2,0 Gew. % Aluminiumnitrid (AIN),
und Magnesium und unvermeidbare, insbesondere herstellungsbedingte, Verunreinigungen als Rest.

11. Verfahren nach Anspruch 10, **dadurch gekennzeichnet, dass** Aluminiumnitrid als Nanopartikel mit einer Partikelgröße von 80 nm bis 400 nm, vorzugsweise von 80 nm bis 250 nm, im, vorzugsweise maximalen, Durchmesser, vorliegen.

12. Verfahren nach Anspruch 10 oder 11, **dadurch gekennzeichnet, dass** ein aus der Magnesiumlegierung hergestellter Schweißzusatzwerkstoff nach einem der Ansprüche 1 bis 4 mittels der Laserauftragschweißvorrichtung auf die Oberfläche des Bauteils aufgebracht wird.

13. Verfahren nach einem der Ansprüche 10 bis 12, **dadurch gekennzeichnet, dass** der Schweißzusatzwerkstoff als Draht oder Band ausgebildet ist.

## Claims

1. A welding consumable for, in particular wire-based, laser deposition welding, wherein the welding consumable is produced from a magnesium alloy, wherein the magnesium alloy the magnesium alloy consists of the following constituent substances with regard to the total weight of the alloy:
3.0% by weight to 9.0% by weight of aluminum (Al),
0.2% by weight to 2.0% by weight of calcium (Ca),
0.1% by weight to 0.8% by weight of manganese (Mn),
0.2% by weight to 2.0% by weight of aluminum nitride (AIN),
and magnesium and unavoidable, in particular production-related, contaminants as the rest.

2. The welding consumable according to claim 1, **characterized in that** aluminum nitride is present as nanoparticles with a particle size of 80 nm to 400 nm, preferably from 80 nm to 250 nm, in, preferably maximum, diameter.

3. The welding consumable according to claim 1 or 2, **characterized in that** the welding consumable is designed as a wire with a diameter of 0.5 mm to 2.0 mm or as a band with a diameter of 0.5 mm to 2.0 mm.

4. The welding consumable according to any of the claims 1 to 3, **characterized in that** the welding consumable is produced according to an extrusion method.

5. A use of a magnesium alloy for producing an, in particular wire-shaped or band-shaped, welding consumable for, in particular wire-based, laser deposition welding, wherein the magnesium alloy the magnesium alloy consists of the following constituent substances with regard to the total weight of the alloy:
3.0% by weight to 9.0% by weight of aluminum (Al),
0.2% by weight to 2.0% by weight of calcium (Ca),
0.1% by weight to 0.8% by weight of manganese (Mn),
0.2% by weight to 2.0% by weight of aluminum nitride (AIN),
and magnesium and unavoidable, in particular production-related, contaminants as the rest.

6. The welding consumable according to claim 5, **characterized in that** aluminum nitride is present as nanoparticles with a particle size of 80 nm to 400 nm, preferably from 80 nm to 250 nm, in, preferably maximum, diameter

7. The use according to claim 5 or 6, **characterized in that** the welding consumable is designed as a wire, in particular with a diameter of 0.5 mm to 2.0 mm, or as a band, in particular with a diameter of 0.5 mm to 2.0 mm.

8. The use according to any of the claims 5 to 7, **characterized in that** the welding consumable is produced according to an extrusion method.

9. The use according to any of the claims 5 to 8, **characterized in that** the magnesium alloy is applied as a structure to a, preferably metal, surface of a, preferably metal, component, in particular by fusing.

10. A method for producing a, preferably metal, component, wherein a structure made of a magnesium alloy is applied to a, preferably metal, surface of the component by means of, preferably wire-based, laser deposition welding using a laser deposition welding device, in particular by fusing, wherein the magnesium alloy the magnesium alloy consists of the following constituent substances with regard to the total weight of the alloy:
3.0% by weight to 9.0% by weight of aluminum (Al),
0.2% by weight to 2.0% by weight of calcium (Ca),
0.1% by weight to 0.8% by weight of manganese (Mn),
0.2% by weight to 2.0% by weight of aluminum nitride (AIN),
and magnesium and unavoidable, in particular production-related, contaminants as the rest.

11. The method according to claim 10, **characterized in that** aluminum nitride is present as nanoparticles, in particular with a particle size of 80 nm to 400 nm, preferably from 80 nm to 250 nm, in, preferably maximum, diameter.

12. The method according to claim 10 or 11, **characterized in that** a welding consumable according to any of the claims 1 to 4 produced from the magnesium alloy is applied to the surface of the component by means of the laser deposition welding device.

13. The method according to any of the claims 10 to 12, **characterized in that** the welding consumable is designed as a wire or band.

## Revendications

1. Matériau d'apport pour soudage par dépôt laser, en particulier à base de fil, le matériau d'apport étant fabriqué à partir d'un alliage de magnésium, l'alliage de magnésium étant composé des éléments suivants, par rapport au poids total de l'alliage:
3,0 % en poids à 9,0 % en poids d'aluminium (AI),
0,2 % en poids à 2,0 % en poids de calcium (Ca),
0,1 % en poids à 0,8 % en poids de manganèse (Mn),
0,2 % en poids à 2,0 % en poids de nitrure d'aluminium (AIN),
et le reste étant constitué de magnésium et d'impuretés inévitables, en particulier liées à la fabrication.

2. Matériau d'apport pour soudage selon la revendication 1, **caractérisé en ce que** le nitrure d'aluminium est présent sous forme de nanoparticules d'une granulométrie allant de 80 nm à 400 nm, de préférence allant de 80 nm à 250 nm, de préférence maximale.

3. Matériau d'apport pour soudage selon la revendication 1 ou la revendication 2, **caractérisé en ce que** le matériau d'apport pour soudage est conçu sous forme de fil d'un diamètre allant de 0,5mm à 2,0mm ou de bande d'un diamètre allant de 0,5mm à 2,0mm.

4. Matériau d'apport pour soudage selon l'une des revendications 1 à 3, **caractérisé en ce que** le matériau d'apport de soudage est fabriqué selon un procédé d'extrusion.

5. Utilisation d'un alliage de magnésium pour la fabrication d'un matériau d'apport pour soudage, en particulier sous forme de fil ou de bande, pour le soudage par dépôt laser, en particulier à base de fil, l'alliage de magnésium étant composé des éléments suivants par rapport au poids total de l'alliage:
3,0 % en poids à 9,0 % en poids d'aluminium (AI),
0,2 % en poids à 2,0 % en poids de calcium (Ca),
0,1 % en poids à 0,8 % en poids de manganèse (Mn),
0,2 % en poids à 2,0 % en poids de nitrure d'aluminium (AIN),
et le reste étant constitué de magnésium et d'impuretés inévitables, en particulier liées à la fabrication.

6. Utilisation selon la revendication 5, **caractérisée en ce que** le nitrure d'aluminium se présente sous forme de nanoparticules d'une granulométrie allant de 80 nm à 400 nm, de préférence allant de 80 nm à 250 nm, de préférence maximale.

7. Utilisation selon la revendication 5 ou la revendication 6, **caractérisée en ce que** le matériau d'apport pour soudage est conçu sous forme de fil, en particulier d'un diamètre allant de 0,5mm à 2,0mm, ou sous forme de bande, en particulier d'un diamètre allant de 0,5mm à 2,0mm.

8. Utilisation selon l'une des revendications 5 à 7, **caractérisée en ce que** le matériau d'apport pour soudage est fabriqué selon un procédé d'extrusion.

9. Utilisation selon l'une des revendications 5 à 8, **caractérisée en ce que** l'alliage de magnésium est appliqué sous forme de structure sur une surface, de préférence métallique, d'un composant, de préférence métallique, en particulier par fusion.

10. Procédé de fabrication d'un composant, de préférence métallique, dans lequel une structure en alliage de magnésium, de préférence à base de fil, est appliquée sur une surface, de préférence métallique, dudit composant par soudage par dépôt laser au moyen d'un dispositif de soudage par dépôt laser, en particulier par fusion, l'alliage de magnésium étant constitué des éléments suivants, par rapport au poids total de l'alliage:
3,0 % en poids à 9,0 % en poids d'aluminium (AI),
0,2 % en poids à 2,0 % en poids de calcium (Ca),
0,1 % en poids à 0,8 % en poids de manganèse (Mn),
0,2 % en poids à 2,0 % en poids de nitrure d'aluminium (AIN),
et le reste étant constitué de magnésium et d'impuretés inévitables, notamment celles liées à la fabrication.

11. Procédé selon la revendication 10, **caractérisé en ce que** le nitrure d'aluminium se présente sous forme de nanoparticules d'une granulométrie compris entre 80 nm et 400 nm, de préférence entre 80 nm et 250 nm, de préférence maximale.

12. Procédé selon la revendication 10 ou la revendication 11, **caractérisé en ce qu'**un matériau d'apport pour soudage fabriqué à partir de l'alliage de magnésium selon l'une des revendications 1 à 4 est appliqué sur la surface du composant au moyen du dispositif de soudage par dépôt laser.

13. Procédé selon l'une des revendications 10 à 12, **caractérisé en ce que** le matériau d'apport de soudage est réalisé sous forme de fil ou de bande.
